# EUROPEAN PATENT APPLICATION

(11) **EP 4 714 792 A1**
(43) Date of publication of application: **25.03.2026**
(21) Application number: 24201384.5
(22) Date of filing: 19.09.2024
(51) Int. Cl.: B62D 21/15, B62D 33/06

(54) **BRACKET FOR CONNECTING A CABIN ASSEMBLY TO A CHASSIS ASSEMBLY OF A HEAVY-DUTY VEHICLE AND HEAVY-DUTY VEHICLE WITH SUCH BRACKET**

(71) Applicant: VOLVO TRUCK CORPORATION, 405 08 Göteborg (SE)
(72) Inventor: Raju, Kiran Raju, Karnataka (IN); Tornvall, Fredrik, 412 57 Göteborg (SE); Gandham, Kranthi Prabhanjan, Dakshina Kannada, Mangaluru 575006 (IN); Gondaliya, Himmat, 362130 Junagadh Gujarat (IN); Joshi, Shweta, Bengaluru,Karnataka,560066 (IN); Ansari, Kasra, 412 67 Göteborg (SE); Mohan, Prasanth, 41484 Göteborg (SE); Hejazi, Daniel, 411 11 Göteborg (SE); Erlandsson, Ulrika, 413 10 Göteborg (SE)
(74) Representative: Germain Maureau

(57) **Abstract**

The invention provides for a bracket (22) for connecting a cabin (13) to a chassis (11) of a heavy-duty vehicle (10), wherein the bracket (22) comprises a main plate (24) having a cabin attachment portion (26) for connecting to the cabin (13) and a chassis attachment portion (28) for connecting to the chassis (13),
wherein the main plate (24) of the bracket (22) comprises an embossment (42) which is embossed perpendicularly to the main plate (24), which is located between the cabin attachment portion (26) and the chassis attachment portion (18) of the main plate (30), and which extends along an embossment line (42L) from or proximate from a rear edge (32, 36) of the bracket (22), towards a front edge (30, 34) of the bracket (22).

The invention also provides for a heavy-duty vehicle equipped with such bracket for connecting a cabin (13) to a chassis (11).

## Description

### TECHNICAL FIELD

The disclosure relates generally to improvements of passenger safety in heavy-duty vehicles in case of collision, especially in case of certain types of collision on the cabin of heavy-duty vehicle. In particular aspects, the disclosure relates to a bracket for connecting a cabin assembly to a chassis assembly of a heavy-duty vehicle and a heavy-duty vehicle equipped with such bracket. The disclosure can be applied to heavy-duty vehicles such as trucks, buses, and construction equipment, among other heavy-duty vehicle types. Although the disclosure may be described with respect to a particular heavy-duty vehicle, the disclosure is not restricted to any heavy-duty particular vehicle.

### BACKGROUND

In certain scenarios of frontal collision of a heavy-duty vehicle, the front portion of the cabin assembly, together with the instrument panel, may be pushed inwards, towards the driver seat, due to the enormous forces arising in the collision. This is particularly the case when a first heavy-duty truck (a rigid truck or a tractor-trailer combination truck) is followed by a second heavy-duty truck (especially a cab-over type of truck), and when the second heavy-duty cannot avoid colliding into the rear of the first truck. This collision scenario will be hereinafter called truck vs truck read-end collision, and is a type of frontal collision for the second truck.

Trucks of the cab-over type have a cabin assembly arranged on a vehicle chassis assembly. The anchoring of the cabin assembly to the vehicle chassis assembly is, in certain truck designs, designed so that the cabin assembly will be at least partially separated from the chassis assembly in a truck vs truck read-end collision, so that the cabin assembly is pushed backwards with respect to the chassis assembly. In this way, the front portion of the cabin assembly, including for example the instrument panel, is prevented from being pushed inwards inside the cabin, thereby reducing the risk of injuring the driver in the cabin. Since the cabin space will be essentially intact after the collision, the cabin doors can still be opened, allowing the driver to get out of the cabin. It is previously known to let the cabin separate from the vehicle chassis by having one or more brackets joining the cabin to the vehicle chassis be broken off during frontal collision, especially in case of truck vs truck read-end collision. To achieve this, each bracket has a fracture indication dimensioned so that the bracket is broken when a certain force is applied to the bracket. The bracket must, however, also be dimensioned to withstand those stresses acting on the bracket during the life of the vehicle, e.g. fatigue stresses. It is, however, difficult to dimension a bracket so that it breaks off when subjected to a certain force in a frontal collision, at the same time as it withstands fatigue stresses and forces arising during the everyday use of the truck.

There is thus a need, in the field of heavy-duty vehicles for designing the connection between the cabin assembly and the chassis assembly in a way which allows rearwards displacement of the cabin assembly with respect to the chassis when subjected to a certain force in a truck vs truck read-end collision, while at the same time withstanding fatigue stresses and forces arising during the everyday use of the heavy-duty vehicle.

### SUMMARY

According to a first aspect of the disclosure, a bracket for connecting a cabin assembly to a chassis assembly of a heavy-duty vehicle is disclosed, wherein the bracket comprises a main plate extending parallel to a longitudinal direction and a vertical direction, wherein the main plate of the bracket comprises a cabin attachment portion for connecting to the cabin assembly and a chassis attachment portion for connecting to the chassis assembly, and comprises opposite front and a rear ends along the longitudinal direction, wherein the main plate of the bracket comprises an embossment which is embossed perpendicularly to the main plate, which is located between the cabin attachment portion and the chassis attachment portion of the main plate, and which extends along an embossment line from or proximate from a rear edge of the bracket, towards a front edge of the bracket. The first aspect of the disclosure may seek to create in the bracket a predefined line of rupture of the bracket when subjected to a certain force in a truck vs truck read-end collision. A technical benefit may include obtaining the required rupture in a reliable way, while nevertheless allowing the bracket to withstand fatigue stresses and forces arising during the everyday use of the heavy-duty vehicle.

Optionally in some examples, including in at least one preferred example, the main plate of the bracket comprises, between its cabin attachment portion and its chassis attachment portion, a notch at or near an edge of bracket, and wherein the embossment extends along the embossment line from the notch towards the opposite edge of the bracket. A technical benefit may include a reliable initiation of the rupture of the bracket.

Optionally in some examples, including in at least one preferred example, the embossment extends continuously along the embossment line. A technical benefit may include a reliable propagation of the rupture through the entirety of the extension of the embossment between the front edge and the rear edge of the bracket.

Optionally in some examples, including in at least one preferred example, the cabin attachment portion and the chassis attachment portion of the main plate of the bracket exhibit continuity of matter through the embossment. A technical benefit may include allowing a simple and low cost manufacturing of the bracket, and/or limiting the number of part interfaces, which limits the risk of uncontrolled generation of fatigue stresses and forces during the everyday use of the heavy-duty vehicle.

Optionally in some examples, including in at least one preferred example, the main plate exhibits, at the embossment a reduced thickness compared to the thickness of the main plate in its cabin attachment portion and in its chassis attachment portion. A technical benefit may include increasing the odds that the embossment will be a priority line of rupture of the bracket.

Optionally in some examples, including in at least one preferred example, along the extension of the embossment line, the embossment exhibits a constant cross section in a plane perpendicular to the main plate and to the embossment line. A technical benefit may include allowing a simple and low-cost manufacturing of the bracket, and/or a homogeneous propagation of the rupture along the embossment.

Optionally in some examples, including in at least one preferred example, along the extension of the embossment line, the embossment exhibits a C-shaped cross section in a plane perpendicular to the main plate and to the embossment line. A technical benefit may include achieving a good compromise in ensuring a reliable rupture in case of collision while still limiting the risk of uncontrolled generation of fatigue stresses and forces during the everyday use of the heavy-duty vehicle.

Optionally in some examples, including in at least one preferred example, the embossment merges into the notch. A technical benefit may include a reliable propagation of the rupture from the notch to the embossment.

Optionally in some examples, including in at least one preferred example, the embossment extends to the front edge of the main plate of the bracket. A technical benefit may include ensuring a reliable total rupture of the bracket.

Optionally in some examples, including in at least one preferred example, the front edge of the main plate exhibits a front flange extending perpendicularly to the main plate, and wherein the embossment extends into the front flange. A technical benefit may include increasing the torsional rigidity of the bracket while ensuring a reliable total rupture of the bracket.

Optionally in some examples, including in at least one preferred example, the cabin attachment and chassis attachment portions of the main plate extend each on one side of the embossment line, each in a parallel plane. A technical benefit may include that the embossment causes a separation between the cabin attachment and chassis attachment portions.

Optionally in some examples, including in at least one preferred example, the cabin attachment and chassis attachment portions of the main plate extend each on one side of the embossment line, each in a separate plane, the separate planes being parallel offset one from the other perpendicularly to the main plate. A technical benefit may include the embossment forming a transition portion between the cabin attachment and chassis attachment portion.

Optionally in some examples, including in at least one preferred example, along the extension of the embossment line, the embossment exhibits a C-shaped cross section in a plane perpendicular to the main plate and to the embossment line, wherein, along a direction perpendicular to main plate, the C-shaped cross section exhibits an apex which is offset from the plane of each of the cabin attachment and chassis attachment portions of the main plate, on a same side of both planes of each of the cabin attachment and chassis attachment portions of the main plate.

According to a second aspect of the disclosure, a heavy-duty vehicle is provided, comprising a cabin assembly mounted to a chassis assembly via at least a left cabin mount and a right cabin mount, wherein each of the left mount and a right mount comprises at least one bracket according to any preceding claim. A technical benefit may include a reliable separation of the cabin assembly with respect to the chassis assembly in case of a collision.

Optionally in some examples, including in at least one preferred example, a given cabin mount comprises two brackets which face each other and which are offset from each other along the direction perpendicular to the main plate of each bracket. A technical benefit may include having a more rigid mount in normal use of the vehicle while still ensuring a reliable separation of the cabin assembly with respect to the chassis assembly in case of a collision.

Optionally in some examples, including in at least one preferred example, the two brackets of a given cabin mount are each mounted on the cabin assembly independently from the other bracket of the same given mount. A technical benefit may include a more reliable connection.

Optionally in some examples, including in at least one preferred example, the two brackets of a given cabin mount are connected one to the other by a transverse connector. A technical benefit may include a one-piece construction of the given cabin mount, inducing limited manufacturing and assembling costs, and/or an increase of the rigidity of the given cabin mount.

Optionally in some examples, including in at least one preferred example, the two brackets of a given cabin mount are arranged mirror-wise one to the other. A technical benefit may include symmetric construction of the cabin mount, inducing a symmetric rigidity.

Optionally in some examples, including in at least one preferred example, the embossment of each of the two brackets of a given cabin mount exhibits, along the extension of the embossment line, a C-shaped cross section in a plane perpendicular to the main plate and to the embossment line, wherein, along a direction perpendicular to the main plate, the C-shaped cross section exhibits an apex, and wherein the apex of the embossment of the two brackets of the given cabin mount are offset away from the other bracket of the given cabin mount.

Optionally in some examples, including in at least one preferred example, the cabin attachment portion of each bracket is rigidly connected without movement to the cabin assembly, and wherein the chassis attachment portion of each bracket is articulated on the chassis assembly. A technical benefit may include a secure connection of the brackets to the cabin assembly.

Optionally in some examples, including in at least one preferred example, the chassis assembly comprises, for each given cabin mount, an articulation pillar of the chassis assembly, wherein the articulation pillar is received between the chassis attachment portion of the two brackets of the given cabin mount, and wherein the chassis attachment portion of each of the two brackets of the given cabin mount is articulated on the articulation pillar. A technical benefit may include a torsionally rigid articulation.

Optionally in some examples, including in at least one preferred example, the cabin assembly comprises, for each given cabin mount, a longitudinally extending floor beam, wherein the floor beam is received between the cabin attachment portion of the two brackets of the given cabin mount, and wherein the cabin attachment portion of each of the two brackets of the given cabin mount is rigidly connected without movement to a respective side of the floor beam. A technical benefit may include a rigid integration of the brackets on the cabin assembly.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary heavy-duty vehicle according to an example.
**FIG. 2** is a schematic cut-out and partial side-view of heavy-duty vehicle equipped with a bracket for connecting a cabin assembly to a chassis assembly according to an example.
**FIG. 3** is a schematic perspective and partial view of a bracket for connecting a cabin assembly to a chassis assembly according to an example.
**FIG. 4** is a schematic and partial transverse cut-out view of a cabin mount for connecting a cabin assembly to a chassis assembly according to an example.

### DETAILED DESCRIPTION

The detailed description set forth below provides information and examples of the disclosed technology with sufficient detail to enable those skilled in the art to practice the disclosure.

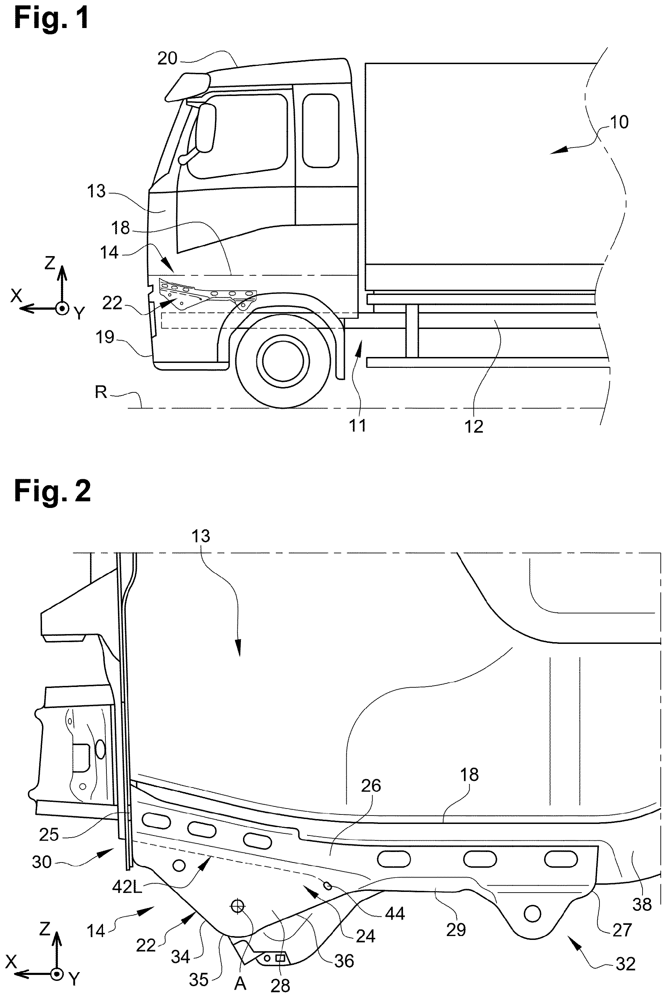

**FIG. 1** is a partial illustration of an exemplary heavy-duty vehicle 10, comprising a cabin assembly 13 mounted on a chassis assembly 11 via cabin mounts 14, at least one of which is provided with a bracket 22 for connecting the cabin assembly 11 to the chassis assembly 13 of the heavy-duty vehicle as described hereinafter. Figure 1 shows only a front portion of the vehicle 10. In one example, the heavy-duty vehicle 10 may be a heavy-duty truck. More particularly, the heavy-duty vehicle 10 may be a tractor of a semi-trailer truck, thus designed to be coupled to a semi-trailer (not shown), or, as shown, a rigid truck. In the following, and as shown on Figure 1, the longitudinal direction X of the vehicle is, conventionally, the direction of travel of the vehicle and the vertical direction Z of the vehicle is perpendicular to the surface of the road R on which the vehicle rolls, and thus corresponds to the vertical direction of gravity when the road R is horizontal. The transverse direction Y is perpendicular to both the longitudinal direction X and the vertical direction Z.

The chassis assembly 11 may comprise a pair of longitudinal beams 12 joined by transverse beams to form a so-called ladder frame. The cabin assembly 13, which comprises a passenger compartment for accommodating a driver of the vehicle, is supported on said chassis 11 via a number of cabin mounts 14.

In the shown example, the heavy-duty vehicle 10 is a cab-over type of heavy-duty truck, where the cabin assembly 13, and especially the passenger compartment thereof, is mounted vertically above a propulsion assembly which is arranged at a front extremity of the chassis assembly 11. In Figure 1, a cabin floor 18 is indicated schematically. The cabin floor 18 is the floor of the passenger compartment of the cabin assembly 11. In a cab-over type of vehicle, a propulsion assembly is arranged on the chassis assembly 11 underneath the cabin floor 18 of the cabin assembly 13. The propulsion assembly can include an internal combustion engine, and can include ancillary equipment of such internal combustion engine. In an electrically propelled vehicle, the propulsion assembly may include components of an electric drivetrain.

In a cab-over type of heavy-duty truck, the front face of the cabin assembly is essentially vertical from a lower bumper assembly 19 to the roof 20 of the cabin assembly 11, meaning that the passenger compartment of the cabin assembly is located at the front longitudinally extremity of the truck.

Especially in the case of a cab-over type of heavy-duty truck, the cabin assembly 13 may be a tilt cabin which is mounted on the chassis assembly 11 so as to be able to tilt around a cabin tilt axis A, which is typically a horizontal transverse axis at the front end of the chassis assembly 11. In such a case, the cabin assembly 13 may tilt between a use position, shown on Figure 1, and a maintenance position where the cabin is tilted forwardly, for example by an angle of 30° to 60° compared to the use position, to allow access to the propulsion assembly.

Typically, the cabin mounts 14 which connect the cabin assembly 13 to the chassis assembly 11 are arranged below the cabin floor 18 of the cabin assembly, and vertically near the level of the longitudinal beams 12 of the chassis assembly 11. Typically, the cabin mounts 14 include front cabin mounts, as shown in Figure 1, and one or several rear cabin mounts, not shown on the figures, at the rear longitudinal extremity of the cabin assembly 13. For example, the front cabin mounts 14 may comprise a left cabin mount and a right cabin mount, transversely spaced apart so as to connect respectively to a left longitudinal beam 12 and a right longitudinal beam 12 of the chassis assembly. In the case of a tilt cabin, the front cabin mounts 14 define the cabin tilt axis A.

In the event of a frontal collision of the vehicle 10 against an obstacle located in front of the vehicle, especially in the case of such obstacle being itself a rear end of heavy duty vehicle, for example the rear end of the semitrailer or of a rigid truck as in a truck vs truck read-end collision, said cabin assembly 13 is arranged with the possibility of backwards relative movement with respect to the chassis assembly 11 and to the longitudinal beams 12. Such backwards relative movement is obtained through the rupture of the cabin mounts 14, said rupture being predefined to occur only under the application of forces tantamount to a severe accident, while being impossible during normal use of the vehicle.

In the following, an example of a cabin mount 14, and especially of a bracket 22 for such a cabin mount, will be described which may be used as or in a front cabin mount as described above, i.e. as one of a left cabin mount or right cabin mount. Such cabin mount 14 comprises at least one bracket 22 for connecting the cabin assembly 13 to the chassis assembly 11 of the heavy-duty vehicle 10 and which, as will be described below, is programmed to rupture under application of a load tantamount to that of the severe accident. Preferably, for a heavy-duty vehicle 10 having several cabin mounts 14 for connecting the cabin assembly 13 to the chassis assembly 11, all of the cabin mounts 14 will be designed in a way to rupture under the application of forces tantamount to severe accident. For a given cabin assembly 11, different mounts can have different designs. For example, rear cabin mounts may have a different design than that of front cabin mounts. Typically, as the structure of a heavy-duty vehicle 10 is usually essentially symmetrical with respect to the longitudinal axis of the vehicle, symmetrically located left and right mounts, transversally facing each other on both sides of the longitudinal axis, will be of the same design. In the example described in detail hereinafter, the mount 14 described is a tilt cabin mount allowing tilting of the cabin as defined above. In an example, each of the left cabin mount and right cabin mount comprises at least one bracket 22 as will be described below.

In the example of Figures 2 to 4, the bracket 22 comprises a main plate 24 which extends parallel to a main plane P which, when the bracket 22 is installed in a heavy duty vehicle 10, is directed in the longitudinal direction X and the vertical direction Z. It is here understood that, as will be described in this particular example, the main plate 24 is not necessarily entirely flat, nor entirely contained in one single plane, nor strictly parallel to the longitudinal direction X, and or to the vertical direction Z. The main plate 24 of the bracket 22 may for example by formed of sheet metal.

In the example, the main plate 24 of the bracket 22 comprises, along the vertical direction Z, a cabin attachment portion 26 for connecting to the cabin assembly 13 and a chassis attachment portion 28 for connecting to the chassis assembly 13. In the illustrated embodiment, the cabin attachment portion 26 is an upper portion of the main plate 24, while the chassis attachment portion 28 is a lower portion of the main plate 24 with respect to the vertical direction Z. The main plate 24 further comprises a front end 30 and a rear end 32, which are the opposite extremities of the main plate 24 along the longitudinal direction X.

In the example of Figures 2 to 4, the cabin attachment portion 26 extends along the longitudinal direction X between a front edge 25 and a rear edge 27 and has, along its longitudinal extension, a substantially constant height along the vertical direction. Still in that example, the chassis attachment portion 28 has a triangular shape in the main plane P, the base of the triangle being on the side of the cabin attachment portion 26, while the summit 35 of the triangle points downwardly and thus forms the lower extremity for the chassis attachment portion 28 and for the bracket 22. In the example, the cabin tilt axis A is located near the summit 35 forming the lower extremity of the chassis attachment portion 28. In the example depicted in the figures, the triangular shape of the chassis attachment portion 28 is shorter, along the longitudinal direction X, than the cabin attachment portion 26. In the example, the chassis attachment portion 28 extends only in correspondence with a front part of the cabin attachment portion 26. In the example, the triangular shape of the chassis attachment portion 28 has thus a front lower edge 34, forwardly of the downwardly oriented summit 35 of the triangle, and a rear lower edge 36, rearwardly of the downwardly oriented summit 35 of the triangle. The front lower edge 34 of the chassis attachment portion 28 merges into the front edge 25 of the cabin attachment portion 26 thus forming a front edge of the main plate 24 at the front end 30 of the main plate 24. The rear lower edge 36 of the chassis attachment portion 28 merges into a rear lower edge 29 of the cabin attachment portion 26, substantially at mid length of the cabin attachment portion 26. The rear lower edge 36 of the chassis attachment portion 28, the rear lower edge 29 of the cabin attachment portion 26 and a rear edge 27 of the cabin attachment portion 26 form a rear edge of the main plate 24 at the rear end 32 of the main plate 24.

In the example of a bracket 22 for a tilt cabin mount, the cabin attachment portion 26 of the bracket may be for example rigidly connected, directly or indirectly, without movement to the cabin assembly 13, while the chassis attachment portion 28 of the bracket 22 may be articulated, directly or indirectly, on the chassis assembly 11. However, a reverse construction could be provided where the bracket could be rigidly connected, without movement, to a component of the chassis assembly, at its chassis attachment portion, and could be articulated on the cabin assembly 13, at its cabin attachment portion. In a rigid cabin mount, not allowing the tilting of the cabin assembly with respect to the chassis assembly 11, both the cabin attachment portion and the chassis attachment portion of the bracket 22 could be rigidly connected, directly or indirectly, without movement, respectively to the cabin assembly 13 and to the chassis assembly 11. In all cases, the cabin mount 14 may comprise a cabin mount suspension according to any design known to those skilled in the art. Such cabin mount suspension may be interposed between the bracket 22 and a portion of the chassis frame such as one of the longitudinal beams or of a transverse chassis beam. Such cabin mount suspension may alternatively be interposed between the bracket 22 and the cabin assembly 13.

In a typical cabin assembly 13, the cabin assembly 13 may comprise several longitudinally extending floor beams 38 which impart structural rigidity to the cabin floor 18. The floor beams 38 may be integral with the cabin floor or may be mounted against the cabin floor. In the shown example, the floor beams 38 are arranged on a downwardly facing inferior surface of the cabin floor 18, the transverse cross section of the floor beams protruding downwardly with respect to that inferior surface.

In an example, the cabin attachment portion 26 of the bracket 22 of a given mount 14 may be attached to such a floor beam 38, for example by being attached to a side surface of such floor beam 38. Preferably, in the case where the bracket 22 is rigidly connected to the cabin assembly 13, the cabin attachment portion 26 of a given mount 14 may be welded, riveted, glued or bolted, etc..., onto the cabin assembly 13, for example on the floor beam 38.

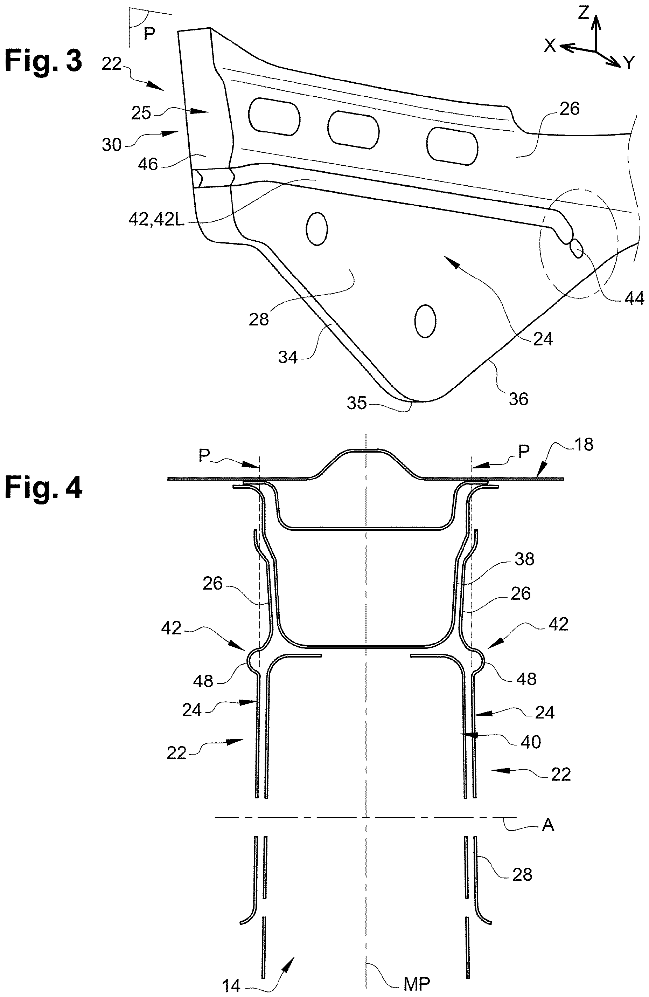

As more clearly visible in Figure 4, the chassis assembly 13 may comprise, for example for each given cabin mount 14, an articulation pillar 50. Such articulation pillar may be rigidly connected to a chassis frame, for example rigidly connected to a chassis longitudinal beam 12 or transverse beam, or can be connected to such a chassis frame via a cabin mount suspension. In the example, the articulation pillar 50 is in the form of a hollow pillar which extends vertically from the chassis frame. The chassis attachment portion 28 of each bracket 22 of a given cabin mount 14 is for example articulated on the articulation pillar 50 around the cabin tilt axis A.

In an example, as shown more particularly in Figure 4, a given cabin mount 14 may be in the form of a dual bracket cabin mount comprising two brackets 22 which face each other and which are offset from each other along a direction perpendicular to the main plane P of each bracket; i.e. along the transverse direction of the cabin tilt axis A. Each of the two brackets 22 of a given cabin mount 14 may be independent from the other bracket of the same given mount, for example by being each mounted independently from one another on the cabin assembly 13 and mounted independently from one another on the chassis assembly 11. However, the two brackets 22 of a given cabin mount may be connected one to the other by a transverse connector. Such transverse connector may be a planar panel connecting the two brackets, for example connecting the front ends of the two brackets or the rear ends of the two brackets. Such transverse connector could also be in the form of a cylindrical bushing rigidly connecting the two brackets along the cabin tilt axis A.

In the case of a dual bracket cabin mount, as shown on Figure 4, it may be provided that, for each given cabin mount 14, a longitudinally extending floor beam 38 is received between the cabin attachment portion 26 of the two brackets 22 of the given cabin mount 14. In such case, where the brackets 22 are further rigidly connected to the cabin assembly 13, the cabin attachment portion 26 of each of the two brackets 22 of the given cabin mount 14 may be rigidly connected without movement to a respective side of the floor beam 38, for example by welding, riveting, gluing or bolting, etc....

In the case of a dual bracket cabin mount 14, and of a chassis assembly 11 comprising an articulation pillar 40, the articulation pillar 40 may be received between the chassis attachment portion 28 of the two brackets 22 of the given cabin mount, and the chassis attachment portion 28 of each of the two brackets 22 of the given cabin mount may be articulated on the articulation pillar 50, as shown also schematically on Figure 4.

Still in the case of a dual bracket cabin mount 14, the two brackets 22 of a given cabin mount may be arranged mirror-wise one to the other, i.e. conformed and located symmetrically one to the other with respect to a median plane MP of the cabin mount 14, which may be in this example a plane perpendicular the transverse direction Y of vehicle 10, e.g. perpendicular the to the cabin tilt axis A.

In order to allow for a rearwards displacement of the cabin assembly 13 with respect to the chassis assembly when subjected to a certain force in a collision, e.g. a truck vs truck read-end collision, the bracket is designed so as to break upon such forces, along a predetermined line along which the bracket may separate in two parts. As shown on Figures 2 to 4, the main plate 24 of the bracket 22 comprises an embossment 42 which is embossed perpendicularly to the main plane P of the main plate, which is located between the cabin attachment portion 26 and the chassis attachment portion 28 of the main plate, and which extends along an embossment line 42L from, or proximate from, the rear end edge of the bracket, towards the front end edge of the bracket.

Such embossment 42 thus creates a geometrical irregularity in the bracket, especially in the main plate, which may become the location of stress concentration when forces are applied to the bracket 22.

The main plate 24 may exhibit, at the embossment 42, a reduced thickness compared to the thickness of the main plate in its cabin attachment portion 26 and in its chassis attachment portion 28. Such reduced thickness may result from the forming process of the embossment 42, such as the case of an embossment 42 formed by stamping or pressing of a previously flat and uniformly thick metal blank. It is to be noted that the embossment 42, whether or not it exhibits such a reduced thickness compared to the thickness of the main plate in its cabin attachment portion and in its chassis attachment portion, may be formed directly by molding, especially in the case of a bracket formed by molding, or can be formed by machining, whatever the process used for obtaining a primary shape of the bracket. If it presents such a reduced thickness, the embossment 42 will tend to have a lower resistance to rupture than the surrounding material of the bracket and will therefore be more likely to be the location of rupture of the bracket 22.

In case the embossment 42 is formed by a process involving a plastic deformation of the metal of the bracket main plate, at the location of the embossment, such as when the embossment 42 is formed by stamping or pressing, the metal may experience, at the location of the embossment 42, localized work hardening. Such localized work hardening may result in a localized increased rigidity, but more importantly may result in an increased brittleness of the metal at the location of the embossment 42.

All of these factors may be taken into account by the skilled man in the art to cause the embossment 42 to be the location of the bracket that will, upon application of forces occurring in a collision, e.g. a truck vs truck read-end collision, be the location that will break in priority. Thus, upon a truck vs truck read-end collision generating sufficient forces on the bracket 22, the bracket 22 will break in two parts. With the cabin attachment portion 26 being on one side of the embossment line 42L, and the chassis attachment portion 28 being on the other side of the embossment line 42L, breakage of the bracket along the extension of the embossment will cause a separation between the cabin attachment portion 26 and the chassis attachment portion 28, thus allowing a relative movement between the cabin assembly 13 and the chassis assembly 11.

Preferably, the embossment 42 extends continuously along the embossment line 42L so as to increase the likelihood that the breakage of the bracket will occur along said embossment line 42L.

Preferably, and as shown in Figures 2 and 3, the main plate 24 of the bracket 22comprises, between its cabin attachment portion 26 and its chassis attachment portion 28, a notch 44, at an extremity or near the extremity of the embossment line 42L, as being a point of weakness of the bracket at which a rupture of the bracket will initiate upon the application of forces corresponding to a collision, e.g. a truck vs truck read-end collision. The notch may be, as illustrated in the example, a hole through the main plate. In the example, the notch 44 is a hole which is near an edge of the main plate of the bracket, but it does not extend into that edge. Alternatively, the notch could be a hole or indentation extending into that edge. Instead of being a hole though the full thickness of the main plate of the bracket, the notch could be a portion of reduced thickness of the plate, preferably at or near an edge of the main plate. In such a case, the reduced thickness of the notch would preferably be thinner than any reduced thickness of the embossment as described above. Preferably, the embossment 42 extends along the embossment line 42L from the notch 44 towards an opposite edge of the bracket. With such a notch 44, upon the application of forces corresponding to a collision, e.g. a truck vs truck read-end collision, rupture of the bracket will initiate in priority at the notch and will propagate to the embossment 42 and follow the embossment line 42L to have a perfectly controlled line of breakage of the bracket, line of breakage which will allow the separation of between the cabin attachment portion 26 and the chassis attachment portion 28 of the bracket. Preferably, the embossment merges into the notch, e.g. the rear notch, such that rupture of the bracket, after initiating at the notch, reliably propagates to the embossment 42.

Preferably, the notch 44 is a rear notch which is located in the bracket at or near the rear end of bracket. In such a case, the embossment extends along the embossment line 42L from the rear notch 44 towards the front end of the bracket. As visible in Figures 2 and 3, the rear notch is for example located near the lower rear edge of 36 of the chassis attachment portion 28, close to where that lower rear edge 36 merges into a rear lower edge 29 of the cabin attachment portion 26.

Preferably, the embossment extends to the front end of the main plate of the bracket. As visible in Figures 2 and 3, the embossment extends to up the front lower edge 34 of the chassis attachment portion 28, close to where it merges into the front edge 25 of the cabin attachment portion 26.

In the example, as visible on Figure 3, the front end 30 of the main plate 24 exhibits a front flange 46 extending perpendicularly to the main plane P of the main plate 24, Such flange 46 may contribute to the torsional rigidity of the bracket. In such a design, the embossment preferably extends into the front flange 46, to ensure that a reliable rupture of the bracket 22 is obtained in case of a collision, e.g. a truck vs truck read-end collision.

It can be noted that, in the example, it can be considered that the embossment line 42L extends parallel to the longitudinal direction X, which is also a main direction of the relative displacement which is sought between the cabin assembly 13 and the chassis assembly 11 after rupture of the bracket. It can be considered that the embossment line 42L extends parallel to the main direction of forces applied to the cabin in the case of the type of truck vs truck read-end collision which the bracket is designed to mitigate.

As a preferred feature, the cabin attachment portion 26 and the chassis attachment portion 28 of the main plate of the bracket exhibit continuity of matter through the embossment 42. In other words, the cabin attachment portion 26, the chassis attachment portion 28 of the main plate, and the embossment 42 are all formed of a single unitary piece of material, preferably sheet metal. This allows a simple and low cost manufacturing of the bracket 22, and/or also limits the number of part interfaces, which limits the risk of uncontrolled generation of fatigue stresses and forces during the everyday use of the heavy-duty vehicle.

In the example, the embossment 42 exhibits, along the extension of the embossment line 42L, a constant cross section in a plane perpendicular to the main plane P of the main plate and to the embossment line 42L. A possible exception to such constant cross-section could include any of the extremities of the extension of the embossment line 42L. In such a case, the embossment 42 may exhibit, along the extension of the embossment line 42L, a constant cross section in a plane perpendicular to the main plane P of the main plate and to the embossment line 42L, except at at least one of the extremities of the extension of the embossment line 42L. For example the embossment 42 may exhibit, along the extension of the embossment line 42L, a constant cross section in a plane perpendicular to the main plane P of the main plate and to the embossment line 42L, except at a rear extremity of the embossment line 42L, for example near the rear notch 44 in case such notch is provided.

In the embodiment as shown in Figure 4, the embossment exhibits a C-shaped cross section in a plane perpendicular to the main plane P of the main plate and to the embossment line 42L.

It can be noted that the cabin attachment portion 26 and the chassis attachment portion 28 of the main plate 28 extend each on one side of the embossment line 42L, and, in the example of Figure 4, each in a plane parallel to the main plane P of the bracket. More specifically, in the example of Figure 4, they extend each in a separate plane parallel to the main plane P, the separate planes being offset one from the other perpendicularly to the main plate 24.

As visible on Figure 4, the C-shaped cross section of the embossment 44 exhibits an apex 48 which is offset from the plane of each of the cabin attachment and chassis attachment portions 26, 28 of the main plate 24, on a same side of both planes of each of the cabin attachment and chassis attachment portions 26, 28 of the main plate 14.

More specifically, in the specific example of a dual bracket cabin mount 14 having two brackets as shown in Figure 4, the C-shaped cross section of the embossment 42 of both brackets exhibit each a respective apex 48. Because the brackets are arranged in a mirror-wise configuration, the respective apexes of the embossments of the two brackets 22 of the given cabin mount 14 are offset away from the other bracket of the given cabin mount 14.

It is further disclosed a bracket according to any one of the examples set forth hereunder.

Example 1: A bracket (22) for connecting a cabin assembly (13) to a chassis assembly (11) of a heavy-duty vehicle (10), wherein the bracket (22) comprises a main plate (24) extending parallel to a longitudinal direction and a vertical direction, wherein the main plate of the bracket comprises a cabin attachment portion (26) for connecting to the cabin assembly (13) and a chassis attachment portion (28) for connecting to the chassis assembly (13), and comprises opposite front and a rear ends (30, 32) along the longitudinal direction (X),wherein the main plate (24) of the bracket (22) comprises an embossment (42) which is embossed perpendicularly to the main plate (24), which is located between the cabin attachment portion (26) and the chassis attachment portion (18) of the main plate (30), and which extends along an embossment line (42L) from or proximate from a rear edge (32, 36) of the bracket (22), towards a front edge (30, 34) of the bracket (22)

Example 2: A bracket according to Example 1, wherein the main plate (24) of the bracket (22) comprises, between its cabin attachment portion (26) and its chassis attachment portion (28), a notch (44) at or near the rear edge (32, 36) of the bracket (22), and wherein the embossment extends along the embossment line from the notch (44) towards the opposite edge (30, 34) of the bracket.

Example 3. A bracket according to any one of the preceding Examples, wherein the embossment (42) extends continuously along the embossment line.

Example 4. Bracket according to any one of the preceding Examples, wherein the cabin attachment portion (26) and the chassis attachment portion (28) of the main plate (24) of the bracket (22) exhibit continuity of matter through the embossment (42).

Example 5. Bracket according to any one of the preceding Examples, wherein the main plate (24) exhibits, at the embossment (42), a reduced thickness compared to the thickness of the main plate in its cabin attachment portion (26) and in its chassis attachment portion (28).

Example 6. A bracket according to any one of the preceding Examples, wherein, along the extension of the embossment line, the embossment (42) exhibits a constant cross section in a plane perpendicular to the main plate (24) and to the embossment line.

Example 7. A bracket according to any one of the preceding Examples, wherein, along the extension of the embossment line, the embossment exhibits a C-shaped cross section in a plane perpendicular to the main plate and to the embossment line.

Example 8. A bracket according to any one of the preceding Examples in combination with the features of Example 2, wherein the embossment merges into the notch.

Example 9. A bracket according to any one of the preceding Examples, wherein the embossment extends to the front edge of the main plate of the bracket.

Example 10. A bracket according to any one of the preceding Examples, wherein the front edge of the main plate exhibits a front flange extending perpendicularly to the main plate, and wherein the embossment extends into the front flange.

Example 11 according to any one of the preceding Examples. A bracket, wherein the cabin attachment and chassis attachment portions of the main plate extend each on one side of the embossment line, each in a plane.

Example 12. A bracket according to any one of the preceding Examples, wherein the cabin attachment and chassis attachment portions of the main plate extend each on one side of the embossment line, each in a separate plane, the separate planes being parallel and offset one from the other perpendicularly to the main plate.

Example 13. A bracket according to any one of the preceding Examples, wherein, along the extension of the embossment line, the embossment exhibits a C-shaped cross section in a plane perpendicular to the main plate and to the embossment line, wherein, along a direction perpendicular to the main plate, the C-shaped cross section exhibits an apex which is offset from the plane of each of the cabin attachment and chassis attachment portions of the main plate, on a same side of both planes of each of the cabin attachment and chassis attachment portions of the main plate.

It is further disclosed a heavy-duty vehicle according to any one of the examples set forth hereunder.

Example 14. A heavy-duty vehicle, comprising a cabin assembly mounted to a chassis assembly via at least a left cabin mount and a right cabin mount, wherein each of the left mount and a right mount comprises at least one bracket according to any preceding Examples.

Example 15. A heavy-duty vehicle according to example 14, wherein a given cabin mount comprises two brackets which face each other and which are offset from each other along the direction perpendicular to the main plate of each bracket.

Example 16. A heavy-duty vehicle according to Example 15, wherein the two brackets of a given cabin mount are each mounted on the cabin assembly independently from the other bracket of the same given mount.

Example 17. A heavy-duty vehicle according to Example 15, wherein the two brackets of a given cabin mount are connected one to the other by a transverse connector.

Example 18. A heavy-duty vehicle according to any one of Examples 15 to 17, wherein the two brackets of a given cabin mount are arranged mirror-wise one to the other.

Example 19. A heavy-duty vehicle according to any one of Examples 14 to 18, wherein the embossment of each of the two brackets of a given cabin mount exhibits, along the extension of the embossment line, a C-shaped cross section in a plane perpendicular to the main plate and to the embossment line, wherein, along a direction perpendicular to the main plate, the C-shaped cross section exhibits an apex, and wherein the apex of the embossment of the two brackets of the given cabin mount are offset away from the other bracket of the given cabin mount.

Example 20. A heavy-duty vehicle according to any one of Examples 14 to 19, wherein the cabin attachment portion of each bracket is rigidly connected without movement to the cabin assembly, and wherein the chassis attachment portion of each bracket is articulated on the chassis assembly.

Example 21. A heavy-duty vehicle according to any one of Examples 14 to 20, wherein the chassis assembly comprises, for each given cabin mount, an articulation pillar of the chassis assembly, wherein the articulation pillar is received between the chassis attachment portion of the two brackets of the given cabin mount, and wherein the chassis attachment portion of each of the two brackets of the given cabin mount is articulated on the articulation pillar.

Example 22. A heavy-duty vehicle according to any one of Examples 14 to 21, wherein the cabin assembly comprises, for each given cabin mount, a longitudinally extending floor beam, wherein the floor beam is received between the cabin attachment portion of the two brackets of the given cabin mount, and wherein the cabin attachment portion of each of the two brackets of the given cabin mount is rigidly connected without movement to a respective side of the floor beam.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A bracket (22) for connecting a cabin assembly (13) to a chassis assembly (11) of a heavy-duty vehicle (10), wherein the bracket (22) comprises a main plate (24) extending parallel to a longitudinal direction and a vertical direction, wherein the main plate of the bracket comprises a cabin attachment portion (26) for connecting to the cabin assembly (13) and a chassis attachment portion (28) for connecting to the chassis assembly (13), and comprises opposite front and a rear ends (30, 32) along the longitudinal direction (X),
wherein the main plate (24) of the bracket (22) comprises an embossment (42) which is embossed perpendicularly to the main plate (24), which is located between the cabin attachment portion (26) and the chassis attachment portion (18) of the main plate (30), and which extends along an embossment line (42L) from or proximate from a rear edge (32, 36) of the bracket (22), towards a front edge (30, 34) of the bracket (22).

2. A bracket according to claim 1, wherein the main plate (24) of the bracket (22) comprises, between its cabin attachment portion (26) and its chassis attachment portion (28), a notch (44) at or near an edge (32, 36) of the bracket (22), and wherein the embossment extends along the embossment line (42L) from the notch (44) towards the opposite edge (30, 34) of the bracket.

3. A bracket according to any one of the preceding claims, wherein the embossment (42) extends continuously along the embossment line (42L).

4. Bracket according to any one of the preceding claims, wherein the cabin attachment portion (26) and the chassis attachment portion (28) of the main plate (24) of the bracket (22) exhibit continuity of matter through the embossment (42).

5. Bracket according to any one of the preceding claims, wherein the main plate (24) exhibits, at the embossment (42), a reduced thickness compared to the thickness of the main plate in its cabin attachment portion (26) and in its chassis attachment portion (28).

6. Bracket according to any one of the preceding claims, wherein, along the extension of the embossment line (42L), the embossment (42) exhibits a constant cross section in a plane perpendicular to the main plate (24) and to the embossment line.

7. Bracket according to any one of the preceding claims, wherein, along the extension of the embossment line (42L), the embossment exhibits a C-shaped cross section in a plane perpendicular to the main plate (24) and to the embossment line (42L)

8. A bracket according to any one of the preceding claims in combination with claim 2, wherein the embossment (42) merges into the notch (44).

9. A bracket according to any one of the preceding claims, wherein the embossment (42) extends to the front edge (30, 34) of the main plate (24) of the bracket (22).

10. A bracket according to any one of the preceding claims in combination with claim 2, wherein, along the extension of the embossment line (42L), the embossment (42) exhibits a C-shaped cross section in a plane perpendicular to the main plate and to the embossment line (42L), wherein, along a direction perpendicular to the main plate, the C-shaped cross section exhibits an apex (48) which is offset from the plane of each of the cabin attachment and chassis attachment portions (26, 28) of the main plate (24), on a same side of both planes of each of the cabin attachment and chassis attachment portions (26, 28) of the main plate (24).

11. A heavy-duty vehicle (10), comprising a cabin assembly (13) mounted to a chassis assembly (11) via at least a left cabin mount (14) and a right cabin mount (14), wherein each of the left mount and a right mount comprises at least one bracket (22) according to any one of the preceding claim.

12. A heavy-duty vehicle according to claim 11, wherein a given cabin mount (14) comprises two brackets (22) which face each other and which are offset from each other along the direction perpendicular to the main plate (24) of each bracket (22).

13. A heavy-duty vehicle according to claim 12, wherein the embossment (42) of each of the two brackets (22) of a given cabin mount (14) exhibits, along the extension of the embossment line (42L), a C-shaped cross section in a plane perpendicular to the main plate and to the embossment line (42L), wherein, along a direction perpendicular to the main plate (24), the C-shaped cross section exhibits an apex (48), and wherein the apex (48) of the embossment (42) of the two brackets (22) of the given cabin mount (14) are offset away from the other bracket (22) of the given cabin mount (14).

14. A heavy-duty vehicle according to any one of claims 11 to 13, wherein the cabin attachment portion (26) of each bracket (22) is rigidly connected without movement to the cabin assembly (13), and wherein the chassis attachment portion (28) of each bracket is articulated on the chassis assembly (11).

15. A heavy-duty vehicle according to any one of claims 11 to 14 in combination with claim 12, wherein the cabin assembly (13) comprises, for each given cabin mount (14), a longitudinally extending floor beam (38), wherein the floor beam (38) is received between the cabin attachment portion (26) of the two brackets (22) of the given cabin mount (14), and wherein the cabin attachment portion (26) of each of the two brackets (22) of the given cabin mount (14) is rigidly connected without movement to a respective side of the floor beam (38).
